# EUROPÄISCHE PATENTSCHRIFT

(11) **EP 2 739 460 B1**
(45) Veröffentlichungstag und Bekanntmachung des Hinweises auf die Patenterteilung: **18.05.2016**
(21) Anmeldenummer: 12753662.1
(22) Anmeldetag: 03.08.2012
(51) Int. Cl.: B29C 70/38, B29C 67/00, B29C 70/16

(54) **VERFAHREN UND VORRICHTUNG ZUR HERSTELLUNG EINES DREIDIMENSIONALEN GEGENSTANDS MIT FASERZUFÜHRUNG**
METHOD AND DEVICE FOR PRODUCING A THREE-DIMENSIONAL OBJECT COMPRISING A FIBER FEED
PROCÉDÉ ET DISPOSITIF DE FABRICATION D'UN OBJET TRIDIMENSIONNEL COMPRENANT L'APPORT DE FIBRES

(30) Priorität: 04.08.2011 DE 102011109369
(43) Veröffentlichungstag der Anmeldung: 11.06.2014
(73) Patentinhaber: Arburg GmbH + Co KG, 72290 Lossburg (DE)
(72) Erfinder: KRAIBÜHLER, Herbert, 72290 Lossburg (DE); DUFFNER, Eberhard, 72181 Starzach (DE)
(74) Vertreter: Reinhardt, Harry
(86) Internationale Anmeldenummer: PCT/EP2012/003316
(87) Internationale Veröffentlichungsnummer: WO 2013/017284

(56) Entgegenhaltungen:
- EP-A1- 1 886 793
- CA-A1- 2 204 792
- DE-A1- 4 102 257
- JP-A- S6 478 822
- US-A- 5 936 861
- US-A1- 2011 000 608
- US-B1- 6 169 605
- Anonymous: "Wire and Thread Embedded Extrusion - Add a new print head to the Reprap, capable of laying wire/thread materials directly from a spool into a printed part!", RepRap Forums , 16. Januar 2010 (2010-01-16), 5. März 2010 (2010-03-05), Seiten 1-10, XP002706004, Gefunden im Internet: URL:http://dev.forums.reprap.org/list.php? 143 [gefunden am 2013-07-25]

## Beschreibung

Die Erfindung betrifft ein Verfahren und eine Vorrichtung zur Herstellung eines dreidimensionalen Gegenstandes aus verfestigbarem Material, das entweder im Ausgangszustand als Fluid vorliegt oder verflüssigt werden kann, nach dem Oberbegriff der Ansprüche 1 und 10.

In der Kunststoffteileherstellung ist bekannt, durch Spritzgießen oder Extrudieren in großen Losgrößen und Serien Teile unter Verwendung von Formwerkzeugen herzustellen. Der Vorteil des Kunststoff-Spritzgießens beruht insbesondere auf der hochgenauen Herstellung von komplexen Teilgeometrien, wobei die Funktionsvielfalt des Spritzgießverfahrens in optimaler Weise die Anforderungen an eine kostengünstige und wirtschaftliche Produktion von Kunststoffteilen abdeckt.

Gleichzeitig wächst mehr und mehr ein Bedarf nach Kunststoffteilen für Stückzahl 1 und kleine Losgrößen, wie z.B. Musterteile mit der Anforderung einer sehr kurzzeitigen Bereitstellung sowie Eigenschaften, die denen von spritzgegossenen Teilen ähnlich sind. Zur Herstellung solcher Teile gibt es Fertigungsverfahren, die weitläufig unter dem Begriff Prototyping und Rapid Manufacturing bekannt sind. Die Herstellung solcher Teile beruht werkzeuglos, d.h. ohne Formwerkzeuge, in den meisten Fällen auf der Erzeugung der Geometrie aus 3D-Daten. Diese Geometrien werden in unterschiedlichster Form durch entsprechende Mittel wie Aufschmelzen von Pulverschichten durch Wärmeeintrag, z.B. mit Laser, generative Systeme wie Druckverfahren in unterschiedlicher verbindender Form der Pulverteile oder auch im sogenannten Schmelzstrangverfahren hergestellt.

Aus der dem Oberbegriff des Anspruches 1 zugrunde liegenden EP 1 886 793 A1 ist eine Vorrichtung bekannt, bei der eine in der Spritzgießtechnik bekannte Plastifiziereinheit an einem unter Druck setzbaren Materialspeicher für die fluide Phase eines Materials angekoppelt wird. Zur Erzeugung eines Gegenstands auf einem Objektträger wird dieses Material dort über eine Austragsöffnung in Form von Tropfen ausgetragen. Aufgrund der Adhäsionskräfte des Materials sind dafür ein hoher Druck und hohe Schmelztemperaturen für das Material erforderlich, zumal der Tropfen eine Größe von 0,01 bis 0.05 mm³ aufweisen soll. Die Adhäsionskräfte führen im Unterschied zu einem Verfahren unter Einsatz von Pulver zu einem Haftvermögen der Tropfen. Dennoch kann dieses Haftvermögen je nach Objekt nicht ausreichend sein, sodass faserverstärkte Strukturen vielfach erwünscht sind.

Aus der CA 2 204 792 A1 ist die Zuführung eines Faserelements zur Einbettung in ein gesondert davon aufgebrachtes, verfestigbares Material bekannt, um dadurch einen faserverstärkten Gegenstand herzustellen. Die Fasern können auch quer zur Form des Gegenstandes eingebracht werden, jedoch geht es dabei um das gewebemäßige Einbringen von Glasfasern. Eine Überbrückung offener Flächen wird dadurch nicht erzeugt.

Aus der US 5,936,861 A ist es ebenfalls bekannt, ein zuvor imprägniertes Faserelement gemeinsam mit einem verfestigbaren Material an einem Gegenstand anzubringen. Die Zufuhr des verfestigbaren Materials erfolgt dabei um das Faserelement herum gleichzeitig mit dem Ausbringen des Fasermaterials. Grundsätzlich kann das verfestigbare Material über eine weitere Austragseinheit auch gesondert ausgetragen werden, wobei ein imprägniertes Faserelement abgelegt wird und anschließend in das Material eingebettet wird.

Aus der US 2003/0236588 A1 ist ein Verfahren zur Herstellung eines Gegenstands bekannt, in dem ein Faserelement kontinuierlich der Austrittsöffnung für das zu verarbeitende Material zugeführt wird, durch die das Material "extrudiert" wird. Das Faserelement kann zudem mit einer Flüssigkeit vorimprägniert werden.

Aus der US 2002/0033548 A1 ist ein Druckverfahren zur Herstellung von Zahnersatz im generativen Aufbau aus einem Material bekannt, dem Fasern zur Verstärkung zugesetzt werden.

Aus der WO 2011/057712 A1 ist ein Verfahren zum Herstellen eines Bauteils aus einem faserverstärkten Werkstoff bekannt. Dabei wird ein Faserhalbzeug, das aus Fasern und einer ungehärteten Kunststoffmatrix besteht, auf einem Werkzeug positioniert, wobei auf dem Faserhalbzeug eine thermoelektrische Folie positioniert wird, die bei Anlegen eines Unterdrucks oder Vakuums durch Mikrowellenbestrahlung erhitzt wird und damit zur Aushärtung des Kunststoffs beiträgt. Ein generativer Bauteilaufbau erfolgt nicht.

Ausgehend von diesem Stand der Technik liegt der vorliegenden Erfindung die Aufgabe zugrunde, ein einfaches Verfahren und eine Vorrichtung zur Herstellung eines dreidimensionalen Gegenstandes im generativen Verfahren mit verbesserten Werkstoffeigenschaften vor allem bei Stützstrukturen zur Verfügung zu stellen.

Diese Aufgabe wird durch ein Verfahren mit den Merkmalen des Anspruches 1 sowie durch eine Vorrichtung mit den Merkmalen des Anspruches 10 gelöst.

In der Praxis hat sich herausgestellt, dass bei Herstellung von räumlichen Teilen wie Rapid-Prototyping-Teilen aus verfestigbarem Material, wie zum Beispiel üblichem thermoplastischem Material, regelmäßig auch Werkstückeigenschaften erwünscht sind, die durch die Materialen an sich nicht ohne weiteres gewährleistet werden können. Faserverstärkte Materialien können hier zwar Abhilfe leisten, insbesondere bei Ausbringen von Tropfen wären jedoch der Faseranteil und seine verstärkende Wirkung zu gering.

Aus diesem Grund wird ein endloses Faserelement dem verfestigbaren Material gleichzeitig mit dem Austragen des Materials aus der Austragseinheit zugeführt, so dass das Faserelement beim Austragen des Materials in dieses eingebettet werden kann und einen Verbund damit eingehen kann. Im Rahmen der Erfindung wird dabei unter einem "endlosen Faserelement" eine zur Faserverstärkung einzubettende Faser verstanden, deren Länge größer als die kleinste Austragsmenge der Austragseinheit, also größer als der Durchmesser eines Tropfens, vorzugsweise größer als der Durchmesser mehrerer Tropfen ist. Sie kann jedoch auch größer sein. Beliebige Formen des Gegenstands können gebildet werden, wozu vorzugsweise die Bewegung von Bauteil und gegebenenfalls auch der Austragseinheit sowie der Faserzuführeinrichtung jeweils gesondert relativ zueinander im Raum während des generativen, formerzeugenden Aufbaus des Gegenstandes erfolgen kann.

Durch die Faserverstärkung wird eine Stützstruktur dadurch erzeugt, dass z.B. für die erste Baureihe ein Faserelement gespannt wird. In diesem Fall wird zuerst das Faserelement an einem Punkt in das ausgetragene Material am Gegenstand eingebettet, dann über die als Stützstruktur benötigte Fläche gespannt und auf der gegenüberliegenden Seite dieser Fläche wieder in das ausgetragenen Material eingebettet. Auf die so gespannten Abschnitte wird dann Material ausgetragen und damit das Faserelement eingebettet und eine Fläche für den weiteren Aufbau des Gegenstandes erzeugt.

Faserelemente können auch dafür sorgen, dass Überhänge am Gegenstand angeformt werden können. Damit kann auf zusätzliche Abstützungen verzichtet werden.

Das verfestigbare Material kann tropfenweise, strangweise oder auch zur schnelleren Bauteilbildung abschnittsweise tropfen- und strangweise ausgetragen werden.

Werden alternativ mehrere Austragseinheiten vorgesehen, lassen sich zum Beispiel auch ablösbare Abstützungen erstellen oder im Außenbereich, in dem die Konturen des Gegenstands gebildet werden, können andere Materialien eingesetzt werden als im Inneren, wo zum Beispiel faserverstärkte Harz-/Silikonstrukturen verwendet werden, die in einer Aushärtestation schichtweise vernetzt werden können.

Die Faserzuführeinrichtung kann der Austragseinheit zugeordnet oder auch in diese integriert sein. Vorzugsweise ist sie jedoch getrennt von der Austragseinheit vorgesehen, da dadurch die Faserstrukturen besser beeinflusst werden können. So ist es zum Beispiel möglich, eine Gewebestruktur zu erzeugen, indem von Schicht zu Schicht die Faser anders orientiert eingebettet wird.

Weitere Vorteile ergeben sich aus den Unteransprüchen und der nachfolgenden Beschreibung.

Im Folgenden wird die Erfindung anhand von den in den Figuren dargestellten Ausführungsbeispielen näher erläutert. Es zeigen:
- Fig. 1: eine dreidimensionale Ansicht einer Vorrichtung zur Herstellung eines dreidimensionalen Gegenstandes mit zugeordneter Faserzuführeinrichtung,
- Fig. 2: eine Darstellung gemäß Fig.1 mit auf einer Mehrachsgeometrie angeordnetem Objektträger,
- Fig. 3: eine Vorrichtung gemäß Fig. 1 in einem weiteren Ausführungsbeispiel mit in die Austragseinheit integrierter Faserzuführung,
- Fig. 4a bis 4d: eine schematische Darstellung des Aufbaus eines Gegenstands,
- Fig. 5: eine Vorrichtung gemäß Fig. 1 in einem dritten Ausführungsbeispiel mit zwei in die Austragseinheit integrierten Materialspeichern,
- Fig. 6: eine Vorrichtung gemäß Fig. 1 in einem vierten Ausführungsbeispiel, in dem mehrere Austragseinheiten und mehrere Faserzuführeinrichtungen vorgesehen sind,
- Fig. 7: den Herstellungsprozess des Gegenstands mit vorgespanntem Faserelement.

### Ausführliche Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen eine Vorrichtung zur Herstellung eines dreidimensionalen Gegenstandes 50 aus verfestigbarem Material, das entweder im Ausgangszustand in einer fluiden Phase vorliegt oder verflüssigt werden kann. Das Austragen des verfestigbaren Materials kann entweder sequenziell in Form von diskontinuierlichen Tropfen 70 aus einer Austrittsöffnung 12a mindestens einer taktbaren Austragseinheit 12 erfolgen, ebenso ist es jedoch möglich, dass verfestigbare Material strangweise aus einer Austragseinheit auszutragen. Kombinationen beider Austragverfahren zur schnelleren Bauteilbildung sind insbesondere bei Verwendung mehrerer Austragseinheiten denkbar.

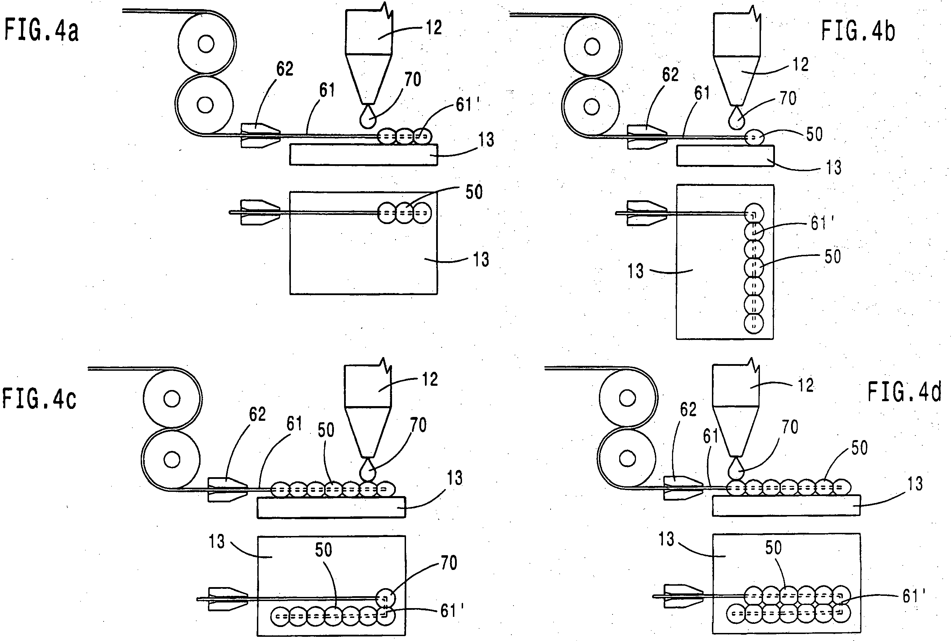

Durch das Austragen des verfestigbaren Materials erfolgt ein generativer Aufbau des Gegenstands 50, wie dies zum Beispiel in den Figuren 4a bis 4d dargestellt ist. Unter einem generativen Aufbau wird dabei ein allmählicher, das Bauteil erzeugender Aufbau zum Beispiel Schicht für Schicht eines Gegenstands verstanden. Die Austragseinheit 12 ist in den Figuren lediglich schematisch dargestellt. lhr Aufbau ist an sich aus der EP 1 886 793 A1 bekannt und wird hiermit unter Verweisung auf diese Schrift in Bezug genommen. Im Detail zeigt diese Schrift den Aufbau eines dreidimensionalen Gegenstandes 50 durch sequenzielles Austragen von Tropfen 70 aus der Austragseinheit 12. Schicht für Schicht wird so der Gegenstand 50 auf dem Objektträger 13 durch die Tropfen 70 erstellt. Die Austragseinheit 12 steht mit einem Materialspeicher in Verbindung, dem über eine Druckerzeugungseinheit von einer Aufbereitungseinheit aufbereitetes Material unter Druck stehend zugeführt wird. Über die taktbare Austrittsöffnung 12a werden die Tropfen erzeugt und in einen Bauraum gefördert, in dem der Gegenstand 50 auf dem Objektträger 13 aufgebaut wird. Vorzugsweise ist die Austragseinheit 12 Teil einer an sich in der Spritzgießtechnik dem Grundsatz nach bekannten Plastifiziereinheit, die zugleich auch den unter Druck setzbarem Materialspeicher zum Einbringen der fluiden Phase umfasst. Der Druck auf die fluide Phase im Materialspeicher erzeugt in direkter Kopplung den Tropfen 70.

Da es für die Verwendung der Vorrichtung und auch für das Verfahren wesentlich ist, wird hier auch auf die Eigenschaft des Materials eingegangen. Das verfestigbare Material ist ein plastifiziertes Material wie zum Beispiel Silikon oder ein plastifizierbares Material wie Kunststoff oder auch pulverförmige Materialien, wobei es im Wesentlichen darauf ankommt, dass das verfestigbare Material entweder im Ausgangszustand in einer fluiden Phase vorliegt oder verflüssigt werden kann. Das Material kann auch ein unter Wärme reversibel aufschmelzbares und damit recycelbares Material sein. Beliebige andere Materialien können verwendet werden, sofern diese Materialien durch die Vorrichtung plastifizierbar und vor allem durch die wenigstens eine Austragseinheit 12 austragbar sind. Als bedarfsweise faserverstärktes, verfestigbares Material kommen sämtliche Materialien wie Harze, Thermoplaste, Silikone und andere Trägermaterialien in Betracht, die einen generativen Schichtaufbau ermöglichen. Da vorzugsweise eine in der Spritzgießtechnik bekannte Plastifiziereinheit zur Aufbereitung des verfestigbaren Materials als plastifiziertes oder plastifizierbares Material verwendet wird, kann ein standardmäßig erhältliches oder beim Spritzgießen vorhandenes Material zur Herstellung der Teile verwendet werden. Ein spezielles Sondermaterial ist damit nicht erforderlich.

Das verfestigbare Material weist in der fluiden Phase einen sogenannten laminaren Quellfluss auf. In den Quellfluss geht u.a. die Anlagerung der Schmelze an der Wandung ein. Dies wird am deutlichsten bei einem Blick in die Erkenntnisse der Spritzgießtechnik. Bei der Formfüllung eines einfachen, rechteckigen Kanals wird die Schmelze über einen sogenannten Angusspunkt eingespritzt und beginnt sich von diesem Punkt mit geschlossenen Fließfronten kreisförmig auszubreiten, bis sie die gesamte Breite der Kavität ausfüllt. Einige Zeit danach kann der Bereich zwischen dem Einlauf und der Fließfront als nahezu ausgebildet betrachtet werden. An der Fließfront selbst herrscht eine besondere Strömungssituation, der "Quellfluss", da die Stromlinien in diesem Bereich wie eine Quelle erscheinen, wenn man sie in Bezug auf ein mitbewegtes Koordinatensystem betrachtet.

Der laminare Quellfluss ist für die Erzeugung von wie hier auf einen Bauraum ausgerichteten' Tropfen 70 auf Grund seiner laminaren Ausbildung einerseits von Vorteil, andererseits bestehen vor allem bei der Ausbildung kleiner Tropfen genau hier auch die Probleme, die eine Umsetzung mit aus der Spritzgießtechnik bekannten Einrichtungen und Materialien erschweren. Die Wandhaftung führt dazu, dass sich die Massen nur schwer zu Tropfen mit gewünschten kleinen Volumen, vorzugsweise im Bereich kleiner gleich 1 mm³ und gewünschter Fluggeschwindigkeit ausbilden lassen, andererseits ist eine entsprechend hohe Viskosität des Materials gerade für die Ausbildung einer geeigneten Tropfenform und die Einbindung einer Faserverstärkung von Bedeutung.

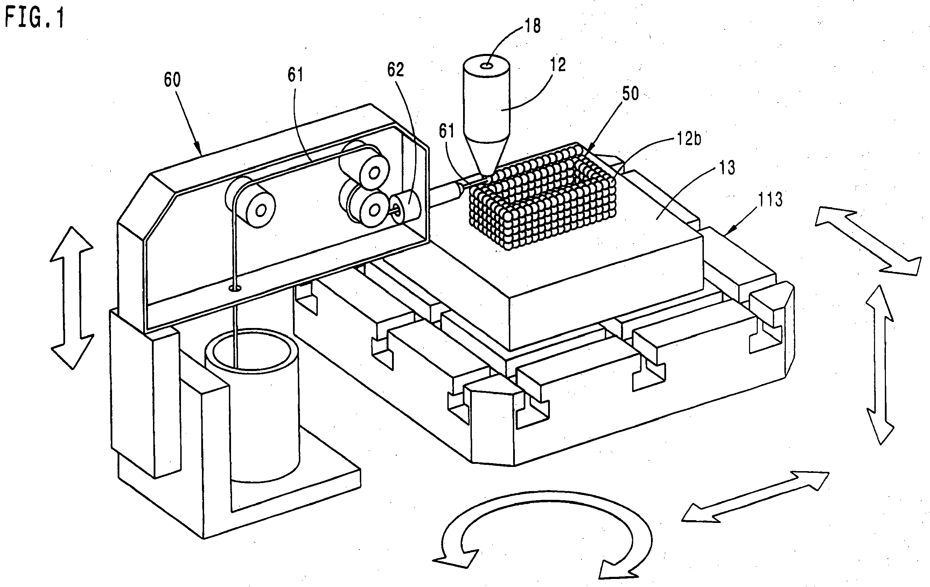

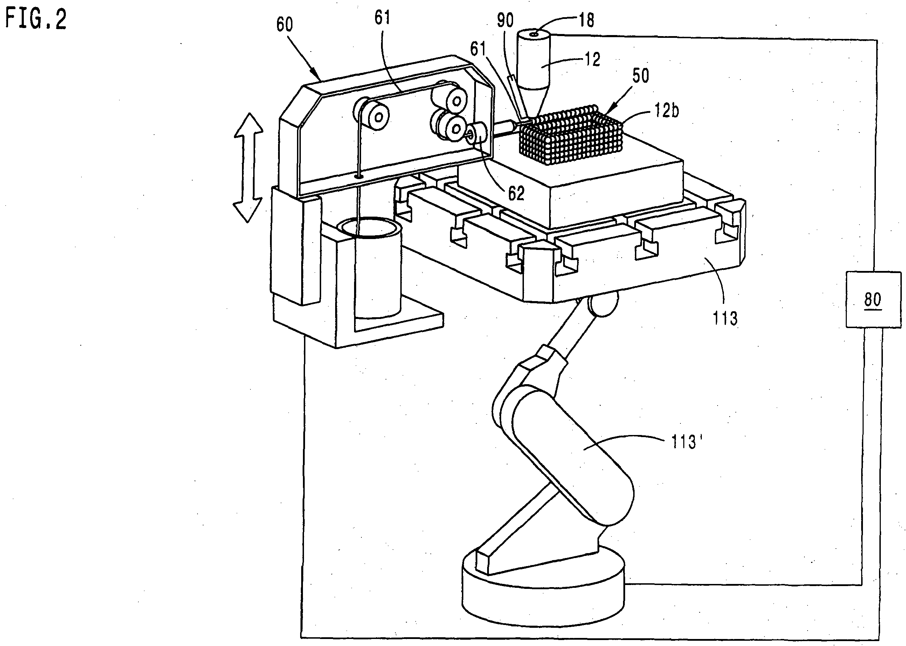

Die Vorrichtung weist gemäß Fig. 1 einen schematisch dargestellten Materialspeicher 18 auf, in dem das verfestigbare Material in der fluiden Phase vorliegt. Das verfestigbare Material wird mittels mindestens einer Austragseinheit 12 in Richtung eines Objektträgers 13 für den herzustellenden Gegenstand generativ aus dem Materialspeicher 18 ausgetragen. Steuermittel 80 sorgen gemäß Fig. 2 für die Steuerung der Bewegung des Objektträgers oder des dreidimensionalen Gegenstands 50 einerseits und der Austragseinheit 12 andererseits, sodass eine Relativbewegung entsteht, die den Aufbau des Gegenstands erzeugt. Ergänzend ist gemäß den Figuren eine Faserzuführeinrichtung 60 zum Zuführen wenigstens eines endlosen Faserelements 61 vorgesehen. Ein "endloses Faserelement" ist dabei eine zur Faserverstärkung einzubettende Faser, deren Länge größer als die kleinste Austragsmenge der Austragseinheit 12, also größer als der Durchmesser eines Tropfens, vorzugsweise größer als der Durchmesser mehrerer Tropfen ist. Die Faserzuführeinrichtung 60 ist ebenfalls über die Steuermittel 80 ansteuerbar. Die Steuermittel erlauben demgemäß eine Relativbewegung wenigstens eines der Elemente umfassend Objektträger 13, Gegenstand 50, Austragseinheit 12 und Faserzuführeinrichtung 60 gegenüber wenigstens einem anderen dieser Elemente. Die Bewegungen sind beispielhaft durch die Pfeile in Fig. 1 angedeutet.

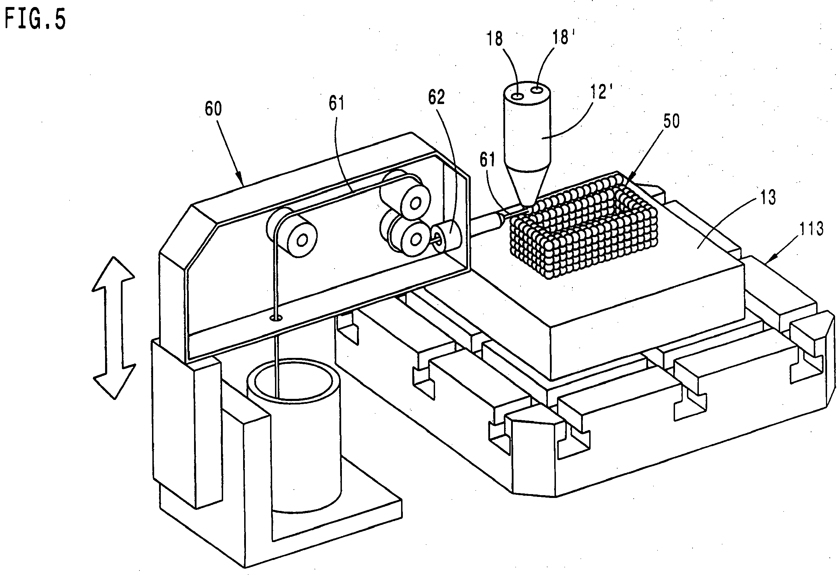

Die Austragseinheit 12 kann eine taktbare Austrittsöffnung 12a zum sequenziellen Austragen des verfestigbaren Materials in Form von vorzugsweise diskontinuierlichen Tropfen 70 aufweisen. Ebenso ist es allerdings auch möglich, das Material strangweise auszutragen, und es ist auch denkbar, bei Einsatz mehrerer Austragseinheiten 12, 12', einen Strangaustrag über eine Austragseinheit und einen tropfenmäßigen Austrag über eine andere Austragseinheit vorzunehmen. Eine derartige Ausführungsform ist in Fig. 5 für den Fall dargestellt, dass an einer Austragseinheit 12' zwei Materialspeicher 18, 18' vorgesehen sind.

Das endlose Faserelement wird von der Faserzuführeinrichtung 60 an einem Auftragspunkt, an dem die Austragseinheit 12 das plastifizierbare Material aufträgt, gleichzeitig mit dem verfestigbaren Material aufgebracht, sodass das Faserelement 61 beim Aufbringen gleichzeitig in das Material eingebettet wird. Dies erlaubt damit verschiedenste Möglichkeiten zur Faserverstärkung des Gegenstands 50.

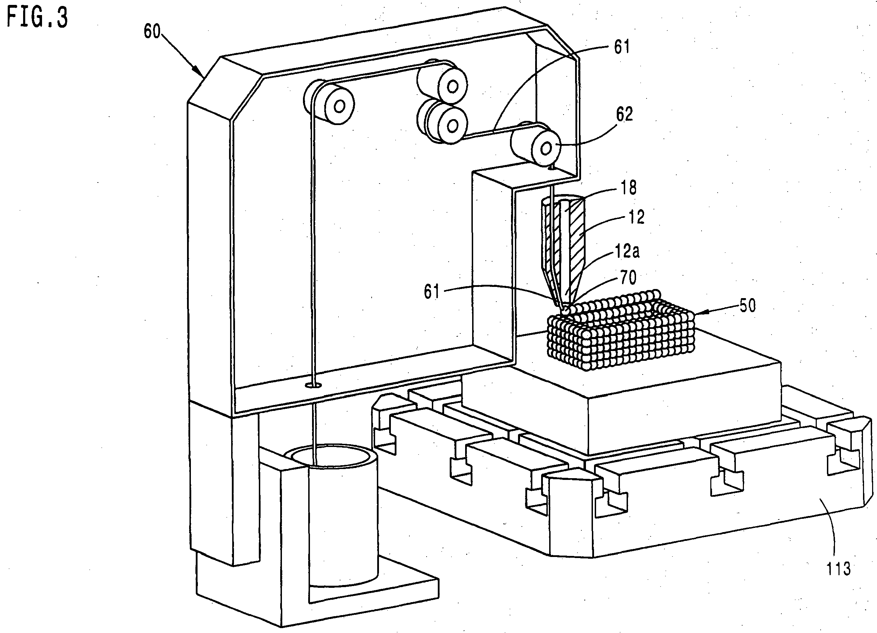

Gemäß Fig. 1 ist die Faserzuführeinrichtung 60 mit einer Faserkontrolleinrichtung 62 zur geregelten Zuführung des endlosen Faserelements 61, wie z.B. einem Faserfilament versehen. Die Faserzuführeinrichtung kann gemäß Fig.1 und 2 getrennt von der Austragseinheit 12 vorgesehen sein und damit auch getrennt ansteuerbar sein, es ist jedoch gleichfalls möglich, diese der Austragseinheit 12 zuzuordnen oder gemäß Fig. 3 sogar in diese zu integrieren. Selbst bei der integrierten Anordnung ist jedoch die Öffnung der Faserzuführeinrichtung 60, über die die Faser zugeführt wird, von der Austrittsöffnung 12a der Austragseinheit beabstandet. Vor allem bei einer gesonderten Anordnung der Faserzuführeinrichtung 60 kann neben Objektträger 13, Gegenstand 50 und/oder Austragseinheit 12 auch die Faserzuführeinrichtung auf einer gesonderten Mehrachsgeometrie angeordnet werden. Eine derartige Mehrachsgeometrie ist durch den 3D-Aktor 113' in Fig. 2 dargestellt. Zudem befindet sich dort der Objektträger 13 auf einem x-y-z Bautisch 113. Auf die Vorteile dieser Ausführungsform wird unten noch näher eingegangen.

Verfahrensgemäß wird das Material aufbereitet und dann in einem Materialspeicher 18 zur Verfügung gestellt. Es erfolgt dann das generative Austragen des verfestigbaren Materials in Richtung auf den Objektträger 13. Mit dem Austragen des verfestigbaren Materials wird wenigstens ein endloses Faserelement 61 zugeführt und als eingebettete Faser 61' am herzustellenden dreidimensionalen Gegenstand in das ausgetragene, verfestigbare Material eingebettet. Das wenigstens eine endlose Faserelement 61 kann geregelt und über die Austragseinheit 12 oder von der Austragseinheit 12 gesondert zugeführt werden. Bedarfsweise ist es möglich, das wenigstens eine endlose Faserelement 61 schichtweise in seiner Orientierung verändert zur Ausbildung einer dreidimensionalen Struktur zuzuführen, bzw. insgesamt eine Gewebestruktur zu schaffen, die die Festigkeit des Bauteils unterstützt. Durch die Anordnung von Mehrachsgeometrien ist es möglich, das verfestigbare Material am Objektträger 13 und/oder am Gegenstand 50 als Überhang anzufügen.

Das endlose Faserelement 61 kann bedarfsweise auch vor seiner Zuführung in einer Flüssigkeit getränkt werden, die die Werkstoffeigenschaften des Gegenstands oder den Herstellungsprozess des Gegenstands unterstützt. So kann diese Tränkung dazu führen, dass sich der Werkstoff besonders gut verbindet, um eine noch bessere mechanische Festigkeit zu erreichen oder, dass sie dazu beiträgt, dass der Herstellungsprozess beschleunigt wird. Ebenso kann der nächste Auftragspunkt durch eine Punktenergiequelle 90 gemäß Fig. 2 wie zum Beispiel einen Laser vorbehandelt werden, um zum Beispiel eine bestimmte Verbindungstemperatur zu erreichen.

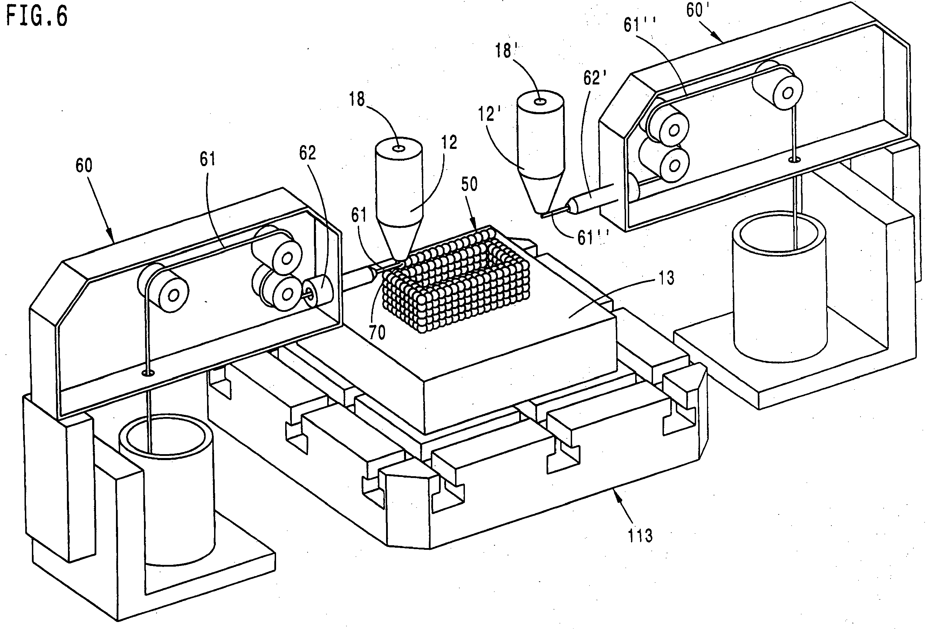

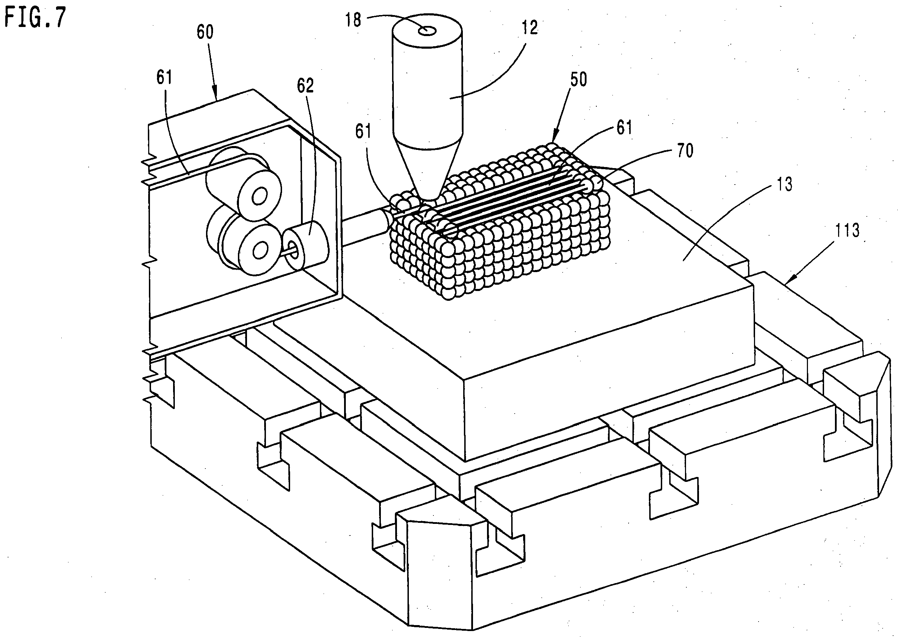

Insbesondere bei Verwendung mehrerer Austragseinheiten 12, 12' gemäß Fig. 6, 7 bzw. mehrerer Materialspeicher 18, 18' in einer Austragseinheit 12 gemäß Fig. 5 ist es möglich, über eine Austragseinheit 12 ein eine Abstützung bildendes Material auszutragen, das nach Verfestigung des Gegenstandes bedarfsweise ablösbar ist. Oder es besteht die Möglichkeit, über wenigstens eine Austragseinheit ein die äußeren Konturen des Gegenstands 50 bildendes, verfestigbares Material auszutragen und über wenigstens eine weitere Austragseinheit ein faserverstärktes verfestigbares Material für innere Strukturen des Gegenstands 50 auszutragen. Die Materialspeicher 18, 18' gemäß Fig. 5 bzw. die Austragseinheiten 12, 12' können dann z.B. von gesonderten Plastifiziereinheiten mit verschiedenen oder auch mit demselben Material versorgt werden.

Ebenso kann bei Verwendung mehrerer Austragseinheiten das endlose Faserelement auch in verschiedene Materialien eingebunden werden, die bis zur kleinsten Austragsmenge eines Tropfens nebeneinander platziert werden. Das endlose Faserelement kann dabei sowohl im Grenzbereich zwischen beim Austragen aneinandergefügten Tropfen zu liegen kommen, ebenso kann es aber auch in nebeneinander liegende Tropfen aus verschiedenen Materialien eingebettet werden.

Die Figuren 4a bis 4d zeigen beispielhaft den Aufbau eines Gegenstands. Über die Faserkontrolleinrichtung 62 wird das endlose Faserelement 61 gemäß Fig. 4a zugeführt. Auf dem Objektträger 13 wird mittels der Austragseinheit 12 das verfestigbare Material zum Beispiel in Form von Tropfen 70 ausgetragen und dabei der Gegenstand 50 generativ erzeugt. Fig. 4a zeigt insofern im oberen Teil eine Seitenansicht und im unteren Teil die Draufsicht auf den so erzeugten Gegenstand.

In Fig. 4b ist nun eine Reihe von Tropfen 70 aufgetragen worden, sodass beim Weiterbauen des Gegenstandes eine Drehung des Objektträgers 113 erfolgt. Fig. 4b zeigt insofern das Aufbringen des ersten Punkts der nächsten Reihe, oder bei einem Arbeiten um Eck der Eckausbildung. In Fig. 4c wurde nun der Objektträger um 180 Grad gedreht, sodass die Austragseinheit 12 jetzt weitere Tropfen 70 neben den bisherigen Tropfen und neben dem bereits erstellten Gegenstand 50 aufbringt. Gleichzeitig liegt auch das endlose Faserelement 61 bereits in Position, um dann gemäß Fig. 4d durch die weiteren Tropfen 70 wiederum eingebettet zu werden. So lässt sich der Aufbau eines Gegenstands in faserverstärkter Form verwirklichen.

Wird nun in der darüber liegenden Schicht der Objektträger gegenüber der Darstellung in den Fig. 4a bis 4d um 90 Grad gedreht eingesetzt, können die Fasern, die in Fig. 4d in der unten dargestellten Draufsicht von links nach rechts verlaufen dann zum Beispiel von oben nach unten verlaufen. Dies führt zu der gewünschten Gewebestruktur innerhalb des Bauteils, was zu besseren Materialeigenschaften des Gegenstands 50 führt.

In Fig. 6 ist neben der ersten Faserzuführeinrichtung 60 mit zugeordneter Austragseinheit 12 eine weitere Faserzuführeinrichtung 60' mit einer weiteren zugeordneten Austragseinheit 12' vorgesehen. Die Faserzuführeinrichtung 60' weist dabei ebenfalls eine Faserkontrolleinrichtung 62' auf, mit der ein weiteres Faserelement 61" kontrolliert bei der Herstellung des Gegenstands 50 zugeführt werden kann. In Fig. 6 befinden sich die weitere Austragseinheit 12' und die weitere Faserzuführeinrichtung in Wartestellung. Hierbei kann auch die eine Austragseinheit strangweise austragen, während die andere Austragseinheit Tropfen austrägt oder es können verschiedene Materialien ausgetragen werden, wie oben erläutert.

Fig. 7 zeigt eine weitere Ausgestaltung des Herstellungsverfahrens, die insbesondere dann Anwendung finden kann, wenn Stützstrukturen zum Aufbau einer ersten Grundfläche oder -reihe eines Gegenstands oder für Überhänge gebildet werden müssen. In diesem Fall wird zuerst das Faserelement 61 an einem Punkt in das ausgetragene Material eingebettet, dann über die als Stützstruktur benötigte Fläche gespannt und auf der gegenüberliegenden Seite dieser Fläche wieder in z.B. einen Tropfen 70 des ausgetragenen Materials eingebettet. In Fig. 7 wurden so mehrere Abschnitte des Faserelements 61 über die oben offene Fläche des Gegenstands 50 gespannt. Auf die so gespannten Abschnitte wird dann das Material durch die Austragseinheit 12 ausgetragen und damit das Faserelement 61 eingebettet und die Fläche für den weiteren Aufbau des Gegenstandes erzeugt.

### Bezugszeichenliste

- 12, 12': Austragseinheit
- 12a: Austrittsöffnung
- 13: Objektträger
- 18, 18': Materialspeicher
- 50: Gegenstand
- 60, 60': Faserzuführeinrichtung
- 61, 61": Faserelement
- 61': Faser eingebettet
- 62, 62': Faserkontrolleinrichtung
- 70: Tropfen
- 80: Steuermittel
- 90: Punktenergiequelle
- 113: x-y-z Bautisch
- 113': 3D-Aktor

## Patentansprüche

1. Verfahren zur Herstellung eines dreidimensionalen Gegenstandes (50) aus verfestigbarem Material, das entweder im Ausgangszustand als Fluid vorliegt oder verflüssigt werden kann, mit den Schritten
- Zurverfügungstellen oder Plastifizieren des verfestigbaren Materials in der bzw. in die fluide Phase und Einbringen des verfestigbaren Materials in wenigstens einen unter Druck stehenden Materialspeicher (18, 18'),
- generatives Austragen des verfestigbaren Materials aus dem Materialspeicher aus einer Austrittsöffnung (12a) mindestens einer Austragseinheit (12, 12'), die Teil einer Spritzgieß Plastifiziereinheit ist, in Richtung auf einen Objektträger (13) für den herzustellenden dreidimensionalen Gegenstand (50), wobei Objektträger (13) oder dreidimensionaler Gegenstand (50) einerseits und die mindestens eine Austragseinheit (12, 12') andererseits relativ zueinander im Raum bewegbar sind,
**dadurch gekennzeichnet, dass** gleichzeitig mit dem Austragen des verfestigbaren Materials wenigstens ein endloses Faserelement (61, 61") beabstandet von der Austrittsöffnung (12a) für das verfestigbare Material dem Gegenstand (50) zugeführt wird und an zwei voneinander beabstandeten Stellen des herzustellenden, dreidimensionalen Gegenstands (50) im ausgetragenen, verfestigbaren Material befestigt bzw. festgespannt wird und anschließend in das ausgetragene Material eingebettet wird.

2. Verfahren nach Anspruch 1, **dadurch gekennzeichnet, dass** das verfestigbare Material sequentiell in Form von diskontinuierlichen Tropfen (70) und/oder zeitweise strangweise ausgetragen wird.

3. Verfahren nach Anspruch 1 oder 2, **dadurch gekennzeichnet, dass** das wenigstens eine endlose Faserelement (61) geregelt und über die Austragseinheit (12) oder von der Austragseinheit (12) gesondert zugeführt wird.

4. Verfahren nach einem der vorhergehenden Ansprüche, **dadurch gekennzeichnet, dass** das wenigstens eine endlose Faserelement (61) mit unterschiedlicher Orientierung zur Ausbildung einer dreidimensionalen Struktur zugeführt wird.

5. Verfahren nach einem der vorhergehenden Ansprüche, **dadurch gekennzeichnet, dass** wenigstens eines der Elemente, umfassend den Objektträger (13), den Gegenstand (50), die Austragseinheit (12, 12') und eine das Faserelement (61, 61") zuführende Faserzuführeinrichtung (60, 60'), auf einer Mehrachs-Geometrie angeordnet relativ zu den anderen der genannten Elemente bewegbar ist.

6. Verfahren nach einem der vorhergehenden Ansprüche, **dadurch gekennzeichnet, dass** das endlose Faserelement (61) vor seiner Zuführung in eine Flüssigkeit getränkt wird, die die Werkstoffeigenschaften des Gegenstand (50) beeinflusst und/oder den Herstellungsprozess des Gegenstands unterstützt.

7. Verfahren nach einem der vorhergehenden Ansprüche, **dadurch gekennzeichnet, dass** über eine Austragseinheit (12, 12') ein eine Abstützung bildendes Material ausgetragen wird, das nach Verfestigung des Gegenstands (50) bedarfsweise abgelöst wird.

8. Verfahren nach einem der vorhergehenden Ansprüche, **dadurch gekennzeichnet, dass** über wenigstens eine Austragseinheit (12, 12') ein die äußeren Konturen des Gegenstands (50) bildendes, verfestigbares Material und über wenigstens eine weitere Austragseinheit (12, 12') ein faserverstärktes, verfestigbares Material für innere Strukturen des Gegenstands (50) ausgetragen wird.

9. Verfahren nach einem der vorhergehenden Ansprüche, **dadurch gekennzeichnet, dass** vor Austragen des verfestigbaren Materials der Auftragspunkt mit einer Punktenergiequelle (90) vorbehandelt, insbesondere auf Verbindungstemperatur temperiert wird.

10. Vorrichtung zur Herstellung eines dreidimensionalen Gegenstandes (50) aus verfestigbarem Material, das entweder im Ausgangszustand als Fluid vorliegt oder verflüssigt werden kann, mit
- mindestens einem unter Druck stehenden Materialspeicher (18, 18'), in dem das verfestigbare Material in der fluiden Phase vorliegt,
- einem Objektträger (13) für den herzustellenden dreidimensionalen Gegenstand (50),
- mindestens einer einen Teil einer Spritzgieß Plastifiziereinheit bildenden Austragseinheit (12, 12') mit einer Austrittsöffnung (12a) zum generativen Austragen des verfestigbaren Materials aus dem Materialspeicher (18, 18') in Richtung des Objektträgers (13) zum Aufbau des Gegenstands (50),
- Steuermitteln (80) zur Steuerung der Bewegung des Objektträger (13) oder des dreidimensionalem Gegenstand (50) einerseits und der Austragseinheit (12, 12') andererseits relativ zueinander,
**dadurch gekennzeichnet, dass** wenigstens eine Faserzuführeinrichtung (60) zum Zuführen wenigstens eines endlosen Faserelements (61) an zwei voneinander beabstandeten Stellen des herzustellenden, dreidimensionalen Gegenstands (50) vorgesehen ist, wobei die Faserzuführung von der Austrittsöffnung (12a) für das verfestigbare Material beabstandet ist, und
dass die Steuermittel den Objektträger (13) oder den dreidimensionalen Gegenstand (50) einerseits und die wenigstens eine Faserzuführeinrichtung und die Austragseinheit so steuern, dass das Faserelement (61) an einem Punkt des Gegenstands (50) in das ausgetragene Material eingebettet, dann über die benötigte Fläche gespannt und auf der gegenüberliegenden Seite dieser Fläche am Gegenstand (50) in das ausgetragenen Materials eingebettet wird und dann in das von der Austragseinheit (12,12') ausgetragene, verfestigbare Material eingebettet wird.

11. Vorrichtung nach Anspruch 10, **dadurch gekennzeichnet, dass** die Austragseinheit (12) eine taktbare Austrittsöffnung (12a) zum sequentiellen Austragen des verfestigbaren Materials in Form von diskontinuierlichen Tropfen (70) aufweist.

12. Vorrichtung nach Anspruch 10 oder 11, **dadurch gekennzeichnet, dass** eine Faserkontrolleinrichtung (62, 62') zur geregelten Zuführung des endlosen Faserelements vorgesehen ist und dass die Faserzuführeinrichtung (60, 60') der Austragseinheit (12) zugeordnet oder von ihr getrennt angeordnet ist.

13. Vorrichtung nach einem der Ansprüche 10 bis 12, **dadurch gekennzeichnet, dass** eines der Elemente umfassend den Objektträger (13), den Gegenstand (50), die Austragseinheit (12) und die das Faserelement (61, 61 ") zuführende Faserzuführeinrichtung (60, 60'), auf einer Mehrachs-Geometrie angeordnet ist.

14. Vorrichtung nach einem der Ansprüche 10 bis 13, **dadurch gekennzeichnet, dass** eine Punktenergiequelle (90) vorgesehen ist zur Vorbehandlung bzw. Temperierung des Auftragspunkts vor Austragen des verfestigbaren Materials.

## Claims

1. Method for producing a three-dimensional object (50) made of solidifiable material which either exists in the initial state as fluid or can be liquefied having the following steps:
- providing the solidifiable material in the fluid phase, or plasticising the solidifiable material into the fluid phase, and introducing the solidifiable material into at least one pressurised material store (18, 18'),
- generatively discharging the solidifiable material from the material store from an outlet opening (12a) of at least one discharge unit (12, 12') which is part of an injection moulding plasticising unit, towards an object carrier (13) for the three-dimensional object (50) to be produced, the object carrier (13) or the three-dimensional object (50) on the one hand, and the discharge unit (12, 12') on the other hand being movable relative to one other spatially,
**characterised in that**, at the same time as the discharge of the solidifiable material, at least one continuous fibre element (61, 61 ") is fed at a spacing from the outlet opening (12a) for the solidifiable material to the object (50), and is fixed or tensioned in the discharged solidifiable material at two points of the three-dimensional object (50) to be produced which are at a spacing from one another, and is then embedded in the discharged material.

2. Method according to claim 1, **characterised in that** the solidifiable material is discharged sequentially in the form of discontinuous drops (70) and/or intermittently as strands.

3. Method according to either claim 1 or claim 2, **characterised in that** the at least one continuous fibre element (61) is separately fed in a controlled manner via the discharge unit (12) or by the discharge unit (12).

4. Method according to any of the preceding claims, **characterised in that** the at least one continuous fibre element (61) is fed with a differing orientation for the construction of a three-dimensional structure.

5. Method according to any of the preceding claims, **characterised in that** at least one of the elements, comprising the object carrier (13), the object (50), the discharge unit (12, 12') and a fibre feeding device (60, 60') feeding the fibre element (61, 61"), is arranged on a multi-axis geometry basis and is movable relative to the other above elements.

6. Method according to any of the preceding claims, **characterised in that** the continuous fibre element (61) is soaked in a liquid before being fed, which liquid affects the material properties of the object (50) and/or supports the production process of the object.

7. Method according to any of the preceding claims, **characterised in that** a material forming a support is discharged via a discharge unit (12, 12'), which material is removed if necessary after solidification of the object (50).

8. Method according to any of the preceding claims, **characterised in that** a solidifiable material forming the outer contours of the object (50) is discharged via at least one discharge unit (12, 12'), and a fibre-reinforced, solidifiable material for inner structures of the object (50) is discharged via at least one further discharge unit (12, 12').

9. Method according to any of the preceding claims, **characterised in that**, before discharge of the solidifiable material, the application point is pretreated with a point energy source (90), in particular is heated to bonding temperature.

10. Device for producing a three-dimensional object (50) made of solidifiable material which either exists in the initial state as fluid or can be liquefied, having:
- at least one pressurised material store (18, 18') in which the solidifiable material in the fluid phase is present,
- an object carrier (13) for the three-dimensional object (50) to be produced,
- at least one discharge unit (12, 12') forming a part of an injection moulding plasticising unit, with an outlet opening (12a) for generatively discharging the solidifiable material from the material store (18, 18') towards the object carrier (13) for constructing the object (50),
- control means (80) for controlling the movement of the object carrier (13) or the three-dimensional object (50) on the one hand, and the discharge unit (12, 12') on the other hand, relative to one other,
**characterised in that** there is provided at least one fibre feeding device (60) for feeding at least one continuous fibre element (61) at two points of the three-dimensional object (50) to be produced which are at a spacing from one another, the fibre supply being at a spacing from the outlet opening (12a) for the solidifiable material,
and **in that** the control means controls the object carrier (13) or the three-dimensional object (50) on the one hand, and the at least one fibre feeding device and the discharge unit, such that the fibre element (61) is embedded in the discharged material at one point of the object (50), is then tensioned over the required area and embedded in the discharged material on the object (50) on the opposite side of this area, and is then embedded in the solidifiable material discharged by the discharge unit (12, 12').

11. Device according to claim 10, **characterised in that** the discharge unit (12) has a pulsable outlet opening (12a) for sequentially discharging the solidifiable material in the form of discontinuous drops (70).

12. Device according to either claim 10 or claim 11, **characterised in that** a fibre control device (62, 62') is provided for the controlled feeding of the continuous fibre element, and **in that** the fibre feeding device (60, 60') is associated with the discharge unit (12) or is arranged separate from it.

13. Device according to any of claims 10 to 12, **characterised in that** one of the elements, comprising the object carrier (13), the object (50), the discharge unit (12) and the fibre feeding device (60, 60') feeding the fibre element (61, 61"), is arranged on a multi-axis geometry basis.

14. Device according to any of claims 10 to 13, **characterised in that** a point energy source (90) is provided for pretreating or heating the application point before discharge of the solidifiable material.

## Revendications

1. Procédé de fabrication d'un objet tridimensionnel (50) à partir d'un matériau durcissable, qui se présente au départ sous la forme d'un fluide ou qui peut être fluidifié, comportant les étapes suivantes
- mise à disposition ou plastification du matériau durcissable dans la phase fluide et introduction du matériau durcissable dans au moins un réservoir de matériau (18, 18') sous pression,
- distribution générative du matériau durcissable depuis le réservoir de matériau par un orifice de sortie (12a) d'au moins une unité de distribution (12, 12') qui fait partie d'une unité de plastification pour moulage par injection, vers un support d'objet (13) pour l'objet tridimensionnel à fabriquer (50), le support d'objet (13) ou l'objet tridimensionnel (50) d'une part et la ou les unités de distribution (12, 12') d'autre part, étant déplaçables l'un par rapport à l'autre dans l'espace,
**caractérisé en ce que**, concomitamment avec la distribution du matériau durcissable, au moins un élément fibreux sans fin (61, 61 ") est ajouté à l'objet (50) à distance de l'orifice de sortie (12a) pour le matériau durcissable et est solidifié ou étalé et fixé sur le matériau durcissable distribué, à deux endroits espacés l'un de l'autre de l'objet tridimensionnel (50) à fabriquer et ensuite incorporé au matériau distribué.

2. Procédé selon la revendication 1, **caractérisé en ce que** le matériau durcissable est distribué séquentiellement sous forme de gouttes discontinues (70) et/ou par intermittence par filets.

3. Procédé selon la revendication 1 ou 2, **caractérisé en ce que** l'élément fibreux sans fin (61) est amené de manière réglée et séparée au-dessus de l'unité de distribution (12) ou par l'unité de distribution (12).

4. Procédé selon l'une des revendications précédentes, caractérisé en ce quau moins un élément fibreux sans fin (61) est amené avec une orientation différente pour la formation d'une structure tridimensionnelle.

5. Procédé selon l'une des revendications précédentes, **caractérisé en ce que** au moins l'un des éléments incluant le support d'objet (13), l'objet (50), l'unité de distribution (12, 12') et un dispositif d'apport de fibres (60, 60') apportant l'élément fibreux (61, 61') est déplaçable par rapport aux autres éléments précités en étant disposé sur une géométrie à plusieurs axes.

6. Procédé selon l'une des revendications précédentes, **caractérisé en ce que** l'élément fibreux sans fin (61) est plongé avant son apport dans un liquide qui influe sur les propriétés du matériau constituant l'objet (50) et/ou soutient le processus de fabrication de l'objet.

7. Procédé selon l'une des revendications précédentes, **caractérisé en ce qu'**un matériau formant un renfort est distribué au moyen d'une unité de distribution (12, 12'), ce matériau étant au besoin retiré après la solidification de l'objet (50).

8. Procédé selon l'une des revendications précédentes, **caractérisé en ce qu'**un matériau durcissable formant les contours extérieurs de l'objet (50) est distribué par au moins une unité de distribution (12, 12') et un matériau durcissable renforcé par des fibres est distribué par au moins une autre unité de distribution (12, 12') pour la structure interne de l'objet (50).

9. Procédé selon l'une des revendications précédentes, **caractérisé en ce qu'**avant la distribution du matériau durcissable, le point d'application est prétraité avec une source d'énergie ponctuelle (90), en particulier amené à une température de liaison.

10. Dispositif de fabrication d'un objet tridimensionnel (50) à partir d'un matériau durcissable, qui se présente au départ sous la forme d'un fluide ou qui peut être fluidifié, comportant
- au moins un réservoir de matériau (18, 18') sous pression, dans lequel le matériau durcissable se trouve dans la phase fluide,
- un support d'objet (13) pour l'objet tridimensionnel (50) à fabriquer,
- au moins une unité de distribution (12, 12') faisant partie d'une unité de plastification pour moulage par injection et ayant un orifice de sortie (12a) pour la distribution générative du matériau durcissable à partir du réservoir de matériau (18, 18') vers le support d'objet (13) pour la construction de l'objet (50),
- des moyens de commande (80) pour la commande du déplacement du support d'objet (13) ou de l'objet tridimensionnel (50) d'une part et de l'unité de distribution (12, 12') d'autre part, l'un par rapport à l'autre,
**caractérisé en ce qu'**au moins un dispositif d'apport de fibres (60) est prévu pour l'apport d'au moins un élément fibreux sans fin (61) à deux endroits espacés l'un de l'autre de l'objet tridimensionnel à fabriquer (50), l'apport de fibres étant espacé de l'orifice de sortie (12a) pour le matériau durcissable, et
**en ce que** les moyens de commande commandent d'une part le support d'objet (13) ou l'objet tridimensionnel (50) et le ou les dispositifs d'apport de fibres et l'unité de distribution de telle manière que l'élément fibreux (61) est incorporé à un point de l'objet (50) dans le matériau distribué, puis est étalé sur la surface nécessaire et incorporé à l'objet (50) du côté opposé de cette surface dans le matériau appliqué et ensuite incorporé dans le matériau durcissable distribué par l'unité de distribution (12, 12').

11. Dispositif selon la revendication 10, **caractérisé en ce que** l'unité de distribution (12) présente un orifice de sortie (12a) cadençable pour une distribution séquentielle du matériau durcissable sous forme de gouttes discontinues (70).

12. Dispositif selon la revendication 10 ou 11, **caractérisé en ce qu'**un dispositif de contrôle de fibres (62, 62') est prévu pour l'apport réglé de l'élément fibreux sans fin et **en ce que** le dispositif d'apport de fibres (60, 60') est associé à l'unité de distribution (12) ou disposé séparément d'elle.

13. Dispositif selon l'une des revendications 10 à 12, **caractérisé en ce que** l'un des éléments incluant le support d'objet (13), l'objet (50), l'unité de distribution (12) et le dispositif d'apport de fibres apportant l'élément fibreux (61, 61") est disposé sur une géométrie à plusieurs axes.

14. Dispositif selon l'une des revendications 10 à 13, **caractérisé en ce qu'**une source d'énergie ponctuelle (90) est prévue pour le prétraitement ou le chauffage du point d'application avant la distribution du matériau durcissable.
